# EUROPEAN PATENT APPLICATION

(11) **EP 3 629 294 A1**
(43) Date of publication of application: **01.04.2020**
(21) Application number: 18197168.0
(22) Date of filing: 27.09.2018
(51) Int. Cl.: G06T 11/00

(54) **METHOD OF PROVIDING A TRAINING DATASET**

(71) Applicant: Siemens Healthcare GmbH, 91052 Erlangen (DE)
(72) Inventor: Fournié, Eric, 91054 Erlangen (DE); Baer, Matthias, 91054 Erlangen (DE); Schöndube, Harald, 91056 Erlangen (DE); Stierstorfer, Karl, 91052 Erlangen (DE)

(57) **Abstract**

The invention discloses a method of providing a training dataset (TD, TD') for training a neural network (NN) for processing CT-data acquired by a CT-scanner having an acquisition geometry and an extended field of view encompassing a scan field of view, which method comprises the steps of providing an original CT-dataset (OCT) of an object (O); applying an affine transformation to transform the original CT-dataset (OCT) on the basis of the acquisition geometry (AG) to obtain a transformed dataset (TCT), a part of which is shifted outside the scan field of view (SFOV), while the transformed dataset (TCT) remains in the extended field of view (EFOV); acquiring the training dataset (TD, TD') by performing a number of forward projections of the transformed dataset (TCT) using the acquisition geometry (AG) for a number of projection angles. The invention further comprises method of processing CT-data (SCT), training data provision unit (30), an image processing unit (14), and a CT system (1).

## Description

The invention describes a method of providing a training dataset, a method for image processing, a training data provision unit, and an image processing unit.

In computed tomography (CT), a correct reconstruction of images is only possible within the so-called scan field of view (SFOV). SFOV refers to a region within a gantry of a CT device whose exact reconstruction is allowed by the size of the detector. Meaning that with CT gantry positions covering at least 180 degrees, an exact image located inside the SFOVcan be reconstructed using a filtered backprojection. However, there are situations in which parts of a patient to be examined are outside the SFOV and, therefore, cannot be reconstructed using conventional reconstruction algorithms. For example, if CT imaging is used to create radiation plans for radiation therapy, special positioning aids are often used e.g. head fixations and breast boards. By using the positioning aids, the possibilities for patient positioning within the CT gantry are often significantly limited and it is often not possible to prevent relevant parts of the patient from being outside the SFOV. Apart from that, the patient's physical appearance (e.g. obesity) may also cause relevant anatomy of the patient to be outside the SFOV. A so-called "extended field of view" (EFOV) adjoins the SFOV in radial extension. The EFOV encompasses the SFOV and represents an area within the CT gantry in which data insufficient to reconstruct an image using a filtered backprojection or a similar algorithm.

Consequently, patient anatomy which spans beyond the SFOV is truncated and part of the information is lost. As a solution, reconstruction of CT images from a partial dataset at the EFOV is known. However, these reconstructions show artefacts that alter the CT numbers and geometric properties of shapes within this region and, therefore, obstruct imaging and diagnosis.

So far, conventional algorithms are known which attempt to compensate for the aforementioned effects. In many cases, however, these algorithms achieve only partial compensation with considerable computational and resource effort.

In order to extend the application range of conventional CT scanners without increasing the bore diameter, a better use of the EFOV region would be desirable.

It is therefore an object of the invention to provide an improved processing of CT data in the area of the extended field of view (EFOV).

This object is achieved by the method of claim 1 of providing a training dataset for training a neural network for processing CT-data; the method of claim 8 of processing CT-data by applying a neural network; by the training data provision unit of claim 9; the image processing unit of claim 11; and the CT system of claim 12.

According to the invention, the method of providing a training dataset for training a neural network for processing CT-data acquired by a CT-scanner having an acquisition geometry and an extended field of view encompassing a scan field of view, which method comprises the steps of providing an original CT-dataset of an object; applying an affine transformation to transform the CT-dataset on the basis of the acquisition geometry to obtain a transformed dataset, a part of which is shifted outside the scan field of view, while the transformed dataset remains in the extended field of view; acquiring the training dataset by performing a number of forward projections of the transformed dataset using the acquisition geometry for a number of projection angles.

A basic idea of the invention is not to use conventional algorithms as in the state of the art, but a trained neural network to overcome the problems mentioned above. Therefore, an efficient procedure to train the neural network is essential. For training a neural network, for example by Supervised Learning, large amounts of data are required both as input for the neural network and as ground truth for comparison with an output processed by the neural network. It is a difficult and furthermore time and resource consuming process to provide these amounts of data on the basis of real CT measurements alone, especially with respect to a certain acquisition geometry and type of CT device.

Therefore, the inventive method of providing a training dataset for training a neural network describes means to generate an infinite number of training datasets from one original CT dataset. The original CT dataset can, for example, be a real two-dimensional or three-dimensional CT-image of a patient or an object like a phantom. Even an artificially generated dataset can be used as the original CT dataset e.g. data of any geometrical object to which Hounsfield units are assigned. As usual, the Hounsfield units denote the attenuation coefficients known in CT imaging.

The term "affine transformation" is to be understood in a mathematical sense and describes a linear transformation e.g. translation, rotation, scaling, shearing, reflection, orthogonal projection or a combination thereof. Preferably, the affine transformation is randomised, for example by random choice of coefficients of the transformation matrix. This is especially advantageous for creating different training datasets.

In each case, the transformation is chosen in such a way that at least a part of the resulting transformed dataset is arranged outside the SFOV, but the dataset as a whole remains in the EFOV which encompasses the SFOV. The SFOV and the EFOV are defined by the acquisition geometry. The acquisition geometry is typically characterised by arrangement and design of an X-ray source and a detector of the CT device.

The forward projections are carried out by means of the described acquisition geometry. Since no real X-rays are projected, the forward projections are usually referred to as synthetic projections. The synthetic projections simulate attenuations of the transformed dataset - i.e. the shifted, scaled etc. object - that would theoretically be exerted on X-ray beams. By means of the forward projections the training dataset is generated deliberately containing artefacts or missing data due to the acquisition geometry.

Although the provision of training data is described on the basis of only one original CT dataset it will be understood that numerous original CT datasets could be used to obtain an even larger number of training datasets without departing from the scope of the invention.

According to the invention, the training data provision unit comprises an input means for obtaining an original CT-dataset; a processor realised to carry out the method of providing a training dataset according to the invention; an output means for returning the training dataset.

A neural network trained, as described in detail below, by means of the training data provided according to the invention is suited for fast and resource-saving image processing. Therefore, according to the invention, the method of processing CT-data by applying a neural network obtained using the method according to the invention comprises the step of inputting a suitable CT-dataset into the neural network to obtain a CT-data output comprising any of: a sinogram, a CT slice image, a CT volume image. Depending on the specific training of the neural network, a wide variety of CT-data output can be generated. The "suitable" input CT-dataset also depends on the training of the neural network as described below.

According to the invention, the image processing unit comprises an input means for obtaining a suitable CT-dataset; a memory means for storing parameter values of the neural network; a processor realised to carry out the method of processing CT-data according to the invention, an output means for returning CT-data output.

According to the invention, the CT system comprises an image processing unit according to the invention. The usage of fast and resource-saving image processing according to the invention has special advantages in direct or instantaneous imaging during an examination with a CT system.

Units or modules for training of the neural network or image processing with the neural network mentioned above can be completely or partially realised as software modules running on a processor. A realisation largely in the form of software modules can have the advantage that an image processing application already installed on an existing imaging system can be updated, with relatively little effort, to implement CT-data processing or training of a neural network in the inventive image processing method. The object of the invention is also achieved by a computer program product with a computer program that is directly loadable into the memory of a computer unit of CT system, and which comprises program units to perform the steps of the inventive methods when the program is executed by the computer unit. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a processor unit of an imaging system. A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

As mentioned above, it is defined during the training of the neural network which kind of data is "suited" for input and which kind of data is obtained as output. Generally, the kind of input data of the finished trained neural network corresponds to the data which is consistently fed into the network during the training. Also, the type of output data corresponds to the data with which the network output is compared during training (Supervised Learning). Therefore, output data may comprise sinograms or reconstructed CT. For example, it is possible to input a sinogram with artefacts due to EFOV effects and obtain a corrected reconstructed image as output.

The general structure (architecture) of the neural network is preferably predefined for example as an encoder-decoder convolutional network, an autoencoder or a U-Net which are known, for instance in field of image segmentation.

In the following, two preferred variations of the inventive training method and the provision of training data are described.

In a first preferred variation of the invention, the method of training a neural network for processing CT-data which preferably comprises the steps of inputting a training dataset obtained using the inventive method into the neural network; performing a number of forward projections of the transformed dataset for a number of projection angles to obtain a modified sinogram; comparing the modified sinogram with the output of the neural network and minimising a divergence by adjusting the neural network; repeating the aforementioned steps with a number of different training datasets until the divergence of the output of the neural network is within a defined limit compared to the modified sinogram.

The input has preferably the format of a sinogram comprising a defined number of projections, each one comprising a defined number of pixels. Thus, the inputs are preferably in a two-dimensional format. The size of the input sinogram does not necessarily have to be of the same size as an originally acquired sinogram i.e. the original scanner raw data on the basis of the acquisition geometry. On the contrary, it can be re-dimensioned, i.e. downsized, compressed and/or decreased in resolution, in order to match the size of the input of the neural network's input. If the input of the neural network has been re-dimensioned, the output should be also re-dimensioned inversely, i.e. upsized, decompressed and/or increased in resolution, in order to match again the size of originally acquired sinogram, i.e. the same number of projections and pixels. The sinogram is passed as input to and then processed by the neural network.

The same transformed dataset as used in the method of providing a training dataset serves as basis for the modified sinogram. To obtain the modified sinogram the forward projections are not restricted by the acquisition geometry and hence cover the region of the EFOV.

The modified sinogram serves as ground truth for the following comparison with the network output. Although the network input and the ground truth are of the same type, the input data are limited to the SFOV due to the projection on the basis of the acquisition geometry, while the ground truth additionally comprises the data of the EFOV. Therefore, the neural network is trained to estimate and complete a sinogram of the EFOV on the basis (with the input) of the sinogram of the SFOV. Preferably, the result sinogram is composed to one part of the original sinogram and to another part of the additional regions of the output of the neural network, whose size (resolution) is most preferably adapted to the original sinogram.

This is accomplished by adjusting the network's free parameters i.e. the weights and biases of the neural network, for example by performing a gradient descent algorithm. Due to the inventive method of providing a training dataset a plurality of training datasets can be generated in order to optimise the neural network until the deviation of the network output from the ground truth is minimal.

In a second preferred variation of the invention, the step of acquiring the training dataset preferably comprises reconstructing an image on the basis of the forward projections. The reconstruction is performed with a conventional reconstruction algorithm regardless of the EFOV effect. Explicitly, no specific EFOV algorithm is used.

Therefore, the method of training a neural network for processing CT-data comprises the steps of inputting a training dataset obtained using the inventive method into the neural network; comparing the modified CT-dataset with the output of the neural network and minimising a divergence by adjusting the neural network; repeating the aforementioned steps with a number of different training datasets until the divergence of the output of the neural network is within a defined limit compared to the transformed CT-dataset.

The second variation differs from the first variation in the input data of the neural network and the ground truth to which the output data is compared. As input a reconstructed CT image is used and the output is compared to the same transformed dataset as obtained in the method of providing a training dataset. In this variation the neural network is trained to output a reconstructed image in which the artefacts due to the limitation of the acquisition geometry are compensated.

Preferably the inventive method of training a neural network comprises a step of performing image processing on the transformed CT-dataset to obtain a processed transformed CT-dataset. Using the processed transformed dataset as ground truth advantageously avoids intermediate steps that are necessary in conventional image processing.

The step of performing image processing preferably comprises a segmentation of the image into a number of segments. The segmentation advantageously simplifies the mapping in the neural network and the storage and/or display of the processed data i.e. the network output. Generally, segmentation algorithms, such as region growing or watershed algorithm, are known.

Preferably air, soft tissue and/or bones are segmented. This advantageous segmentation facilitates diagnosis and planning of radiation therapy.

The inventive training unit comprises a means for obtaining a training dataset; a processor realised to carry out the method of training a neural network according to the invention; memory means for storing parameter values of the neural network.

Other objects and features of the present invention will become apparent from the following detailed descriptions considered in conjunction with the accompanying drawings. It is to be understood, however, that the drawings are designed solely for the purposes of illustration and not as a definition of the limits of the invention.
FIG 1 shows an example of the inventive CT system;
FIG 2 shows an exemplary block diagram of the inventive training data provision unit, the inventive training unit and the inventive image processing unit;
FIG 3 shows a flow chart of a first embodiment of the inventive training method;
FIG 4 and 5 show examples of datasets of the first embodiment of the inventive training method;
FIG 6 and 7 show examples of input and output data of an embodiment of the inventive image processing method;
FIG 8 shows a flow chart of a second embodiment of the inventive training method;
FIG 9 to 11 show examples of datasets of the first embodiment of the inventive training method.

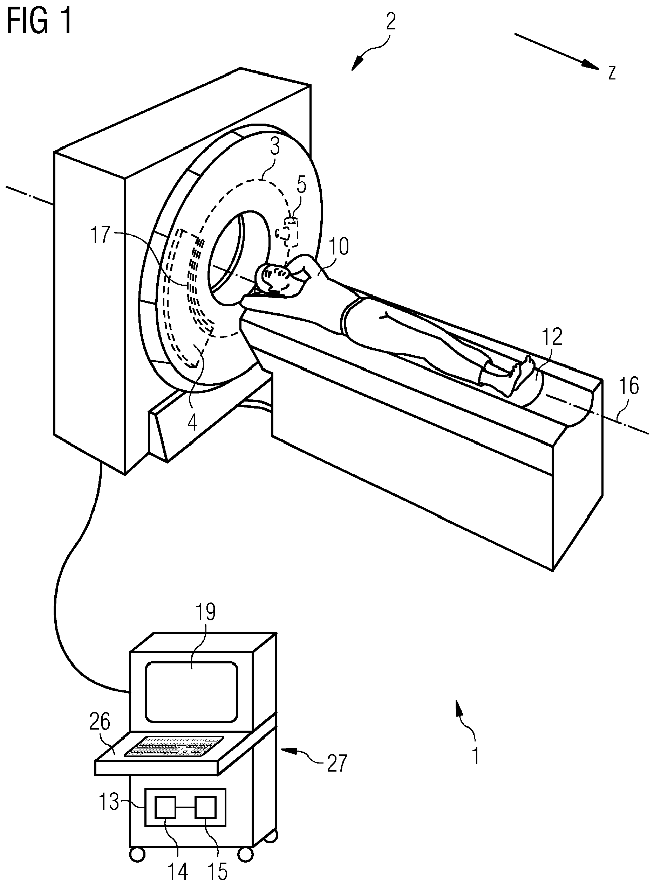

FIG 1 roughly schematically illustrates a computer tomography system (CT system) 1 as an exemplary embodiment according to the invention. The CT system 1 comprises a user terminal 27 and a CT device 2 as a medical imaging modality. The CT device 2 comprises a patient table 12, which is adjustable along a system axis 16 for positioning a patient 10 as an examination object in the measuring field. In the following, the system axis 16 is also referred to as the z-axis. The CT device also comprises a gantry 3 with a source-detector arrangement 4, 5 mounted to be rotatable around the system axis 16. The source-detector arrangement 4, 5 comprises an X-ray radiation source 5 and a detector 4 which are aligned opposite each other in such a way that during acquisition X-rays emanating from the focus of the X-ray radiation source 5 impinge on the detector 4. On basis of the arrangement and design of the detector 4 and the X-ray radiation source an acquisition geometry is characterised that defines a scan field of view SFOV and an extended field of view EFOV. The detector 4 is structured into individual pixels 17 arranged in several detector rows for the spatially resolved detection of X-rays.

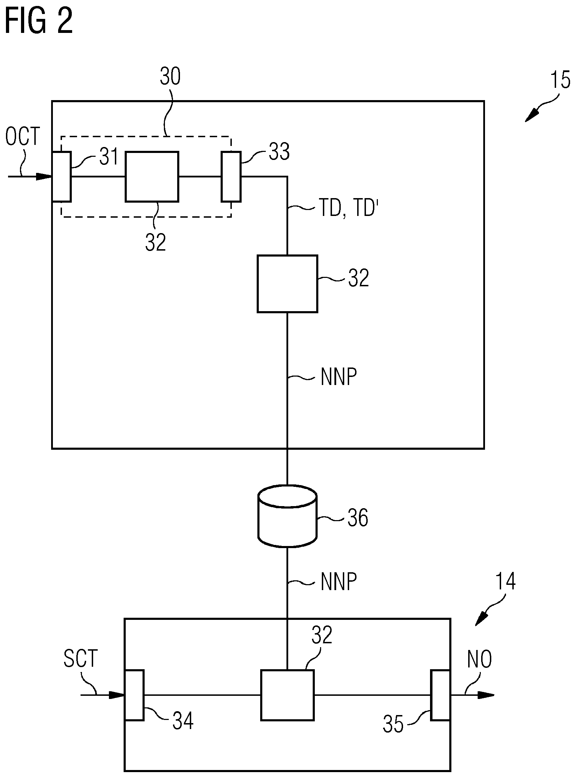

The detector 4 generates a set of projection data for each projection with an assigned projection angle. The projection data represent the attenuation values of all pixels 17 of an X-ray radiation weakened by the patient 10. They are recorded in detector 4 and sent to the user terminal 27 with a computer unit 13, which comprises a training unit 15 in accordance with the invention and an image processing unit 14 which are designed to carry out respective inventive methods as described in detail in FIG 2. The terminal further comprises a keyboard 26 for user input and a monitor 19 for graphical output.

FIG 2 shows an exemplary block diagram of components of the computer unit 13 that are essential to the invention, namely the inventive training unit 15 comprising an inventive training data provision unit 30 and the inventive image processing unit 14.

The training data provision unit 30 comprises an input means 31, a processor 32, an output means 33. The input means 31 obtain an original CT-dataset OCT. Since all the inventive methods can be executed on one computing unit 13 or alternatively transferred via a network like a local network or the internet, the input and output means 32, 33, 34, 35 can at least partially be realised as software interfaces and/or suited connections between the components. Therefore, the input means 31 can provide, for example, a real CT slice image of a patient 10 as original CT dataset OCT which was acquired by the CT scanner 2. The input means 31 can alternatively provide an artificially obtained dataset e.g. a geometric object such as a triangle, a circle or a square comprising Hounsfield units equivalent to soft tissue obtained by other components (not shown) of the computing unit 13. The original CT dataset is passed to the processor 32.

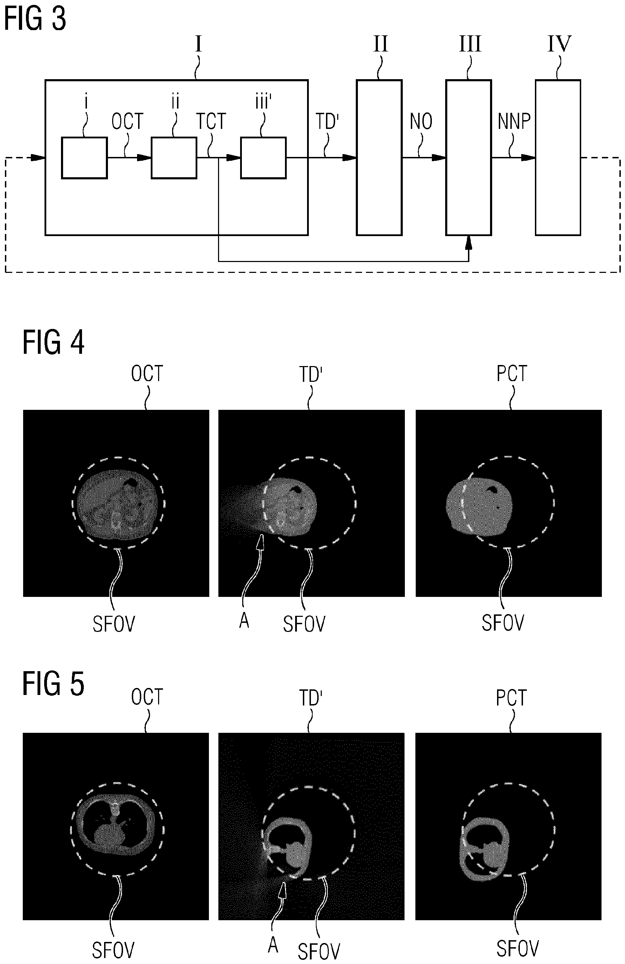

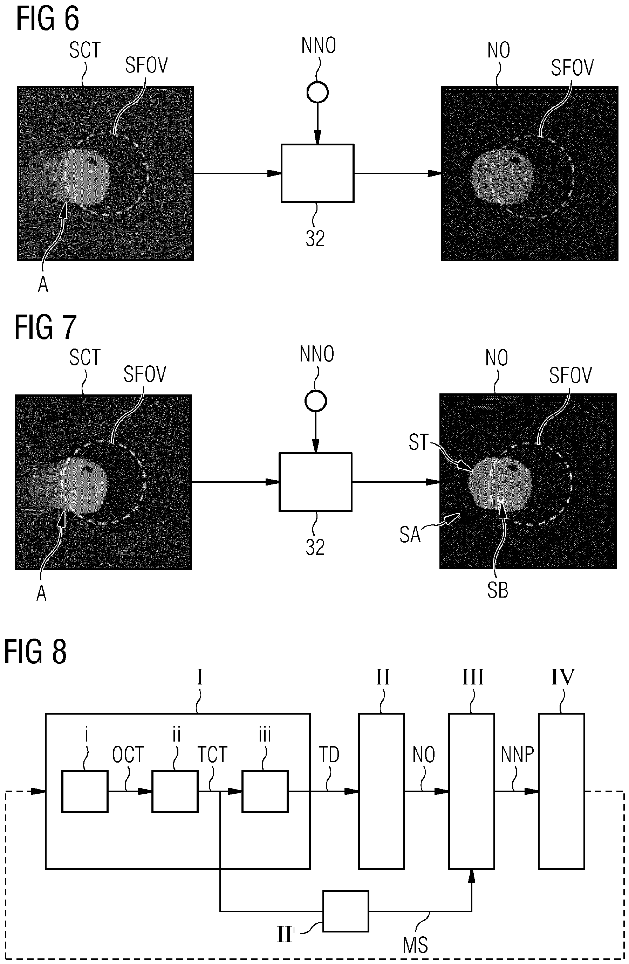

One processor 32 can perform all the inventive methods together. Alternatively the performance can be distributed on different processors 32 even in a cloud of different computer units. The processor 32 is realised to carry out the inventive method of providing a training dataset TD, TD' and the inventive method of training a neural network which are described in detail in FIG 3 and 8.

The processor 32 uses the training dataset TD, TD' to train a neural network which can be characterised by neural network parameters NNP comprising an architecture of the network and the weights of the network's individual neurons. Therefore, the terms neural network and neural network parameters NNP are used synonymously in the following. The neural network parameters NNP are stored in a memory 36, such as a local memory (hard disc drive, solid state drive, flash memory etc.), a portable memory or a server of a computer network.

From the memory means 36 the completely trained neural network NNP can be retrieved by and used in the image processing unit 14. According to the inventive method of image processing, the image processing unit 14 obtains a scanned CT dataset SCT via an input interface 34 which is processed by the neural network NNP in the processor 32. The scanned CT dataset SCT is usually a dataset acquired from a patient for diagnosis and planning future treatment. It can be acquired directly before or at any time interval before the imaging process. The processed data is returned as an output of the neural network NO by the output means 35 and can be displayed, for example, on the monitor 19 of the terminal 27 or stored in the memory 36.

FIG3 shows a flow chart of a first embodiment of the inventive training method. During a step I of obtaining training data an exemplary embodiment of the method of providing training data is performed. In a step i an original CT dataset OCT is obtained, as described above. Two different original CT datasets OCT are illustrated in FIG 4 and 5. It can be seen that for a complete acquisition the examined object, i.e. the patient, is arranged in the SFOV. In step ii an affine transformation on the basis of the acquisition geometry of the CT scanner 2 is performed. For the understanding of the affine transformation see the two different processed CT-datasets PCT which are essentially equal to the transformed CT datasets TCT. Compared to the original CT dataset OCT the transformed datasets TCT are translated and/or rotated such that at least a part of the transformed dataset TCT is arranged outside the SFOV. The affine transformation is preferably randomised to obtain different training datasets TD' for each use.

In step iii' synthetic forward projections are performed on the transformed CT dataset TCT on the basis of the acquisition geometry for a number of projection angles. The result is reconstructed to the training data TD'. The training data TD' has the form of a reconstructed CT image including smeared areas of artefacts A due to the acquisition geometry.

In step II of the training method the training data TD' is input into and processed by the neural network NNP. In step III neural network's output NO is compared to the transformed CT dataset TCT as a ground truth. Preferably, before the comparison III, the transformed CT dataset TCT is further processed by means of a basically known segmentation algorithm to obtain the processed CT dataset PCT (as shown in FIG 4 and 5) which serves as ground truth. The processed CT dataset PCT here comprises two components surrounding air or vacuum (depicted in black) and the patient body contour (depicted in grey). The divergence between the network output NO and the transformed CT dataset TCT (or preferably the processed CT dataset PCT) minimised for example by means of a gradient descent method.

As indicated by the dashed arrow, the steps I to IV of the training method described above can be repeated with different training datasets TD' to further optimise the neural network's weights.

The use of a completely trained neural network NNO in accordance with the inventive method of image processing is illustrated for two examples in FIG 6 and 7. A scanned CT dataset SCT is input into and processed by the neural network NNO by means of the processor 32. Depending on the exact training of the neural network NNO, the network output NO may differ. In FIG 6 the network is trained to perform a two component segmentation into surrounding air (depicted black) and the patient's contour (depicted grey) analogue to the training described in FIG 4 and 5. In contrast, FIG 7 shows an output NO of a neural network NNO trained to perform a three component segmentation into surrounding air SA (depicted in black), soft tissue ST (depicted in grey) and segmented bones SB (depicted in white).

In the first embodiment, the neural network is trained to use a CT slice image afflicted with artefacts due to the restriction of the acquisition geometry. The output of the neural network is a corrected and preferably segmented CT slice image, showing the contour and/or relevant segmented components of the patient's body.

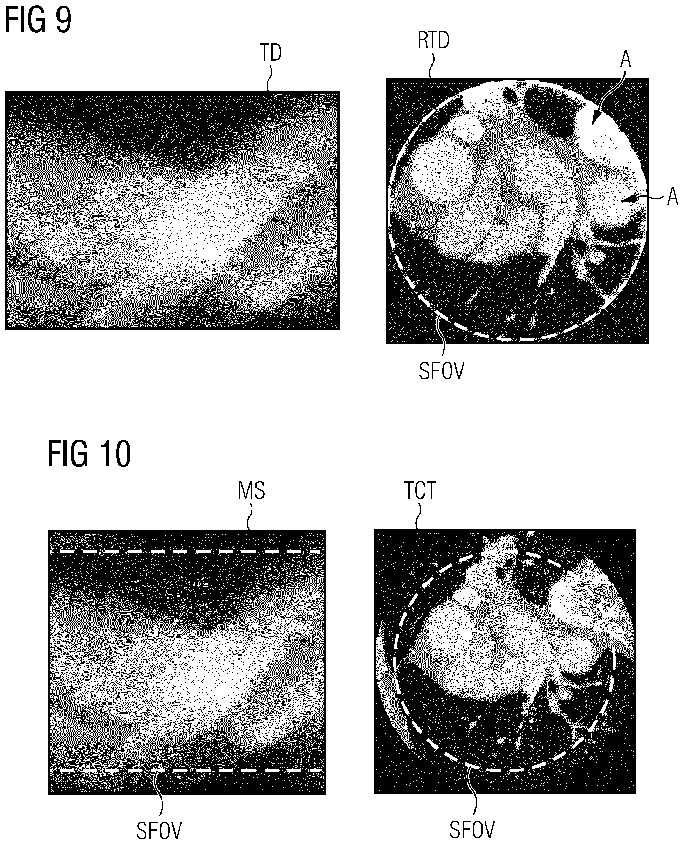

FIG 8 illustrates a flow chart of a second embodiment of the inventive training method. This embodiment differs from the first embodiment in step iii and an additional step II'. In step iii no reconstruction of the forward projections is performed. In contrast the forward projections are used directly as training data TD in the form of a sinogram which is restricted due to the acquisition geometry. The training data TD, i.e. the limited sinogram, is illustrated in FIG 9. Solely for a better understanding, a reconstructed image RTD of the training data TD is shown with artefacts A due to the restriction of the acquisition geometry.

In the step II' the transformed CT dataset TCT is forward projected, but with no restriction due to the acquisition geometry. The obtained modified sinogram MS which is used as a ground truth for the following comparison is shown in FIG 10. Apart from the modified sinogram FIG 10 shows the transformed CT dataset TCT on which the modified sinogram MS is based.

The transformed CT dataset TCT clearly extends beyond the SFOV.

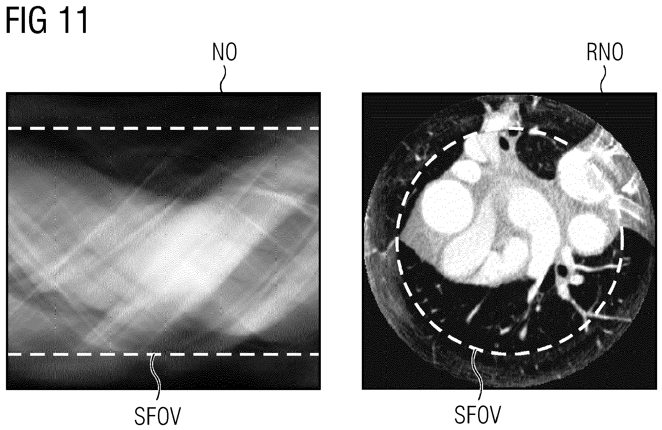

In FIG 11 the output NO of the completely trained neural network NNP of the second embodiment is shown as an estimated and completed sinogram with no restrictions due to the acquisition geometry. Analogue to FIG 9 and 10 a reconstruction RNO of the network output NO is shown additionally for a better understanding showing the obtained completion beyond the SFOV.

In the second embodiment, the neural network is trained to use a limited sinogram as input. The output of the neural network is an estimated completion of the input sinogram which extends beyond the SFOV.

Although the present invention has been disclosed in the form of preferred embodiments and variations thereof, it is to be understood that numerous additional modifications and variations could be made thereto without departing from the scope of the invention. For example, although the method has been described in the context of processing 2D CT images, the method can equally be applied to the processing of 3D images. For the sake of clarity, it is to be understood that the use of "a" or "an" throughout this application does not exclude a plurality, and "comprising" does not exclude other steps or elements. The mention of a "unit" or a "system" does not preclude the use of more than one unit or system.

## Claims

1. A method of providing a training dataset (TD, TD') for training a neural network (NN) for processing CT-data acquired by a CT-scanner having an acquisition geometry and an extended field of view encompassing a scan field of view, which method comprises the steps of
- providing an original CT-dataset (OCT) of an object (0),
- applying an affine transformation to transform the original CT-dataset (OCT) on the basis of the acquisition geometry (AG) to obtain a transformed dataset (TCT), a part of which is shifted outside the scan field of view (SFOV), while the transformed dataset (TCT) remains in the extended field of view (EFOV),
- acquiring the training dataset (TD, TD') by performing a number of forward projections of the transformed dataset (TCT) using the acquisition geometry (AG) for a number of projection angles.

2. A method according to claim 1, wherein the step of acquiring the training dataset (TD') comprises reconstructing an image on basis of the forward projections.

3. A method of training a neural network (NN) for processing CT-data (SCT), which method comprises the steps of
- inputting a training dataset (TD) obtained using the method according to claim 1 into the neural network (NN),
- performing a number of forward projections of the transformed dataset (TCT) for a number of projection angles to obtain a modified sinogram (MS),
- comparing the modified sinogram (MS) with the output (NO) of the neural network (NN) and minimising a divergence by adjusting the neural network (NN),
- repeating the aforementioned steps with a number of different training datasets (TD) until the divergence of the output (NO) of the neural network (NN) is within a defined limit compared to the modified sinogram (MS).

4. A method of training a neural network (NN) for processing CT-data (SCT), which method comprises the steps of
- inputting a training dataset (TD') obtained using the method according to claim 2 into the neural network (NN),
- comparing the transformed CT-dataset (TCT, PCT) with the output (NO) of the neural network (NN) and minimising a divergence by adjusting the neural network (NN),
- repeating the aforementioned steps with a number of different training datasets (TD') until the divergence of the output (NO) of the neural network (NN) is within a defined limit compared to the transformed CT-dataset (TCT).

5. A method according to claim 4, comprising a step of performing image processing on the transformed CT-dataset (TCT) to obtain a processed transformed CT-dataset (PCT).

6. A method according to claim 5, wherein the step of performing image processing comprises a segmentation of the image into a number of segments.

7. A method according to claim 6, wherein air (SA), soft tissue (ST) and/or bones (SB) are segmented.

8. A method of processing CT-data (SCT) by applying a neural network (NN) obtained using the method according to any of the claims 3 to 7, which method comprises the step of inputting a suitable CT-dataset (SCT) into the neural network to obtain a CT-data output (NO) comprising any of a sinogram, a CT slice image, a CT volume image.

9. A training data provision unit (30) comprising
- an input means (31) for obtaining an original CT-dataset (OCT),
- a processor (32) realised to carry out the method of providing a training dataset (TD, TD') according to any of claims 1 or 2,
- an output means (33) for returning the training dataset (TD, TD').

10. A training unit (15) comprising
- a means for obtaining a training dataset (30),
- a processor (32) realised to carry out the method of training a neural network according to any of claims 3 to 7,
- a memory means (36) for storing parameter values (NNP) of the neural network (NN).

11. An image processing unit (14) comprising
- an input means (34) for obtaining a suitable CT-dataset (SCT),
- a memory means (36) for storing parameter values (NNP) of the neural network (NN),
- a processor (32) realised to carry out the method of processing CT-data according to claim 8,
- an output means (35) for returning CT-data output (NO).

12. A CT system (1) comprising an image processing unit (14) according to claim 11.

13. A computer program product comprising a computer program that is directly loadable into a memory of a computer unit (13) and which comprises program elements for performing relevant steps of a method according to any of claims 1 to 8 when the computer program is executed by the computer unit (13) .

14. A computer-readable medium on which is stored program elements that can be read and executed by a computer unit (13) in order to perform relevant steps of a method according to any of claims 1 to 8 when the program elements are executed by the computer unit (13).
